# FASCICULE DE BREVET EUROPEEN

(11) **EP 4 129 825 B1**
(45) Date de publication et mention de la délivrance du brevet: **12.06.2024**
(21) Numéro de dépôt: 22187580.0
(22) Date de dépôt: 28.07.2022
(51) Int. Cl.: B64D 29/08, B64D 29/06

(54) **ENSEMBLE POUR UNE NACELLE D'UN MOTEUR D'AÉRONEF, LEDIT ENSEMBLE COMPORTANT UN CAPOT FIXE ET UN CAPOT MONTÉ MOBILE SUR LE CAPOT FIXE**
BAUGRUPPE FÜR EINE GONDEL EINES FLUGZEUGTRIEBWERKS, WOBEI DIE BAUGRUPPE EINE FESTE HAUBE UND EINE BEWEGLICH AUF DER FESTEN HAUBE MONTIERTE HAUBE UMFASST
ASSEMBLY FOR A NACELLE OF AN AIRCRAFT ENGINE, SAID ASSEMBLY COMPRISING A FIXED COVER AND A MOBILE COVER MOUNTED ON THE FIXED COVER

(30) Priorité: 03.08.2021 FR 2108418
(43) Date de publication de la demande: 08.02.2023
(73) Titulaire: Airbus Operations SAS, 31060 Toulouse (FR)
(72) Inventeur: GASTALDI, Umberto, 31060 TOULOUSE (FR); BROCHARD, Wolfgang, 31060 TOULOUSE (FR); PAUTIS, Olivier, 31060 TOULOUSE (FR)
(74) Mandataire: Cabinet Le Guen Maillet

(56) Documents cités:
- CN-A- 108 238 262
- DE-C- 717 795
- FR-A1- 3 088 360
- US-A1- 2018 222 567
- US-A1- 2021 070 417
- US-B2- 8 567 721
- US-B2- 11 008 089
- US-B2- 11 060 331

## Description

### DOMAINE TECHNIQUE

La présente invention concerne un ensemble pour une nacelle d'un moteur d'aéronef, ledit ensemble comportant un capot fixe fixé à une structure de la nacelle et un capot mobile monté mobile sur le capot fixe, une nacelle comportant un tel ensemble ainsi qu'un aéronef comportant au moins une telle nacelle.

### ÉTAT DE LA TECHNIQUE ANTÉRIEURE

Un aéronef comporte classiquement au moins une nacelle constituée, entre autres d'un capot de soufflante, et à l'intérieur de laquelle est disposé un moteur et d'autres systèmes comme le système d'huile, des systèmes électriques, etc.

Pour assurer la maintenance des composants logés dans la nacelle sous le capot de soufflante, ce dernier est monté mobile sur une structure de la nacelle par l'intermédiaire de charnières positionnées en haut du capot de soufflante. Avec l'arrivée des moteurs dits à très grand taux de dilution, le capot de soufflante présente des dimensions très importantes et la souplesse de ce capot peut entraîner des déformations en vol et donc induisant une pénalité de traînée supplémentaire.

Les documents CN-A-108 238 262 et US-B-11 008 089 divulguent des nacelles de l'état de la technique.

Il est donc nécessaire de trouver un arrangement différent qui permet de limiter les déformations du capot de soufflante tout en assurant l'accès sous le capot de soufflante pour des raisons de maintenance.

### EXPOSE DE L'INVENTION

Un objet de la présente invention est de proposer un ensemble pour une nacelle d'un moteur d'aéronef, ledit ensemble comportant un capot fixe fixé à une structure de la nacelle et un capot mobile monté mobile sur le capot fixe, ainsi que des moyens assurant le mouvement du capot mobile et la rigidité du capot fixe autour du capot mobile.

À cet effet, est proposé un ensemble pour une nacelle d'un aéronef, ledit ensemble comportant :
- un capot fixe destiné à être fixé à une structure rigide de la nacelle et présentant une ouverture en son âme, formant une fenêtre,
- un capot mobile monté mobile sur le capot fixe entre une position fermée dans laquelle le capot mobile obture la fenêtre et une position ouverte dans laquelle le capot mobile n'obture pas la fenêtre, et comportant un bord supérieur destiné à être orienté vers le haut de la nacelle et un bord inférieur à l'opposé du bord supérieur, où le capot mobile présente entre son bord supérieur et son bord inférieur, une nervure de renfort, où le capot fixe comporte dans le prolongement de la nervure de renfort du capot mobile, une nervure supérieure de renfort qui s'étend à partir du bord de la fenêtre correspondant au bord supérieur et une nervure inférieure de renfort qui s'étend à partir du bord de la fenêtre correspondant au bord inférieur,
- au moins une charnière, où chaque charnière comporte une partie fixe sous forme d'une chape femelle fixée à la nervure supérieure de renfort le long du bord supérieur du capot fixe, une partie mobile sous forme d'une ferrure mâle fixée à la nervure de renfort du capot mobile, où la partie mobile est logée dans la partie fixe, et un axe monté entre la partie fixe et la partie mobile et où chaque axe est parallèle au bord supérieur,
- au moins deux verrous disposés le long du bord inférieur du capot mobile, où chaque verrou comporte une première partie solidaire de la nervure inférieure de renfort, une deuxième partie solidaire de la nervure de renfort du capot mobile, des moyens de verrouillage mobiles entre une position de verrouillage qui verrouille la première partie et la deuxième partie l'une avec l'autre et une position de déverrouillage qui laisse libre la première partie et la deuxième partie l'une par rapport à l'autre, et des moyens d'actionnement prévus pour déplacer les moyens de verrouillage de la position de verrouillage à la position de déverrouillage et inversement,
- une ferrure sur laquelle sont fixées les parties fixes,
- une ferrure sur laquelle sont fixées les parties mobiles,
- une ferrure sur laquelle sont fixées les premières parties et
- une ferrure sur laquelle sont fixées les deuxièmes parties, et
où chaque ferrure est fixée, d'une part, à la nervure de renfort correspondante et, d'autre part, au capot portant la nervure de renfort correspondante.

Un tel ensemble permet d'accéder à l'intérieur de la nacelle tout en assurant la rigidité des capots.

Avantageusement, chaque nervure de renfort est constituée de deux sous-nervures distantes l'une de l'autre, où chaque sous-nervure porte un élément de chaque paire, à savoir de la paire de parties fixes, de la paire de parties mobiles, de la paire de premières parties et de la paire de deuxièmes parties.

Avantageusement, l'ensemble comporte un joint fixé au capot fixe le long des bords de la fenêtre et la ferrure sur laquelle sont fixées les parties mobiles comporte, le long du bord supérieur, un prolongement qui, en position fermée, est contre le joint du côté opposé au capot fixe.

Avantageusement, l'ensemble comporte un joint fixé au capot fixe le long des bords de la fenêtre et la ferrure sur laquelle sont fixées les deuxièmes parties comporte, le long du bord inférieur, un prolongement qui, en position fermée, est contre le joint du côté opposé au capot fixe.

Avantageusement, l'ensemble comporte le long d'un bord avant du capot mobile, au moins un verrou complémentaire, où chaque verrou complémentaire comporte une première partie solidaire du capot fixe, une deuxième partie solidaire du capot mobile, des moyens de verrouillage mobiles entre une position de verrouillage qui verrouille la première partie et la deuxième partie l'une avec l'autre et une position de déverrouillage qui laisse libre la première partie et la deuxième partie l'une par rapport à l'autre, et des moyens d'actionnement prévus pour déplacer les moyens de verrouillage de la position de verrouillage à la position de déverrouillage et inversement.

Avantageusement, les moyens d'actionnement sont une poignée accessible depuis l'extérieur de la nacelle, la poignée est mobile entre une position rétractée dans laquelle elle est dans un logement prévu à cet effet dans le capot mobile ou le capot fixe et une position déployée dans laquelle elle est en dehors dudit logement et dépasse du capot considéré, et la position rétractée correspond à la position de verrouillage et la position déployée correspond à la position de déverrouillage.

L'invention propose une nacelle d'un aéronef comportant une structure rigide et un ensemble selon l'une des variantes précédentes où le capot fixe est fixé à la structure rigide. L'invention propose un aéronef comportant au moins une nacelle selon la variante précédente.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef selon l'invention,
Fig. 2 est une vue en perspective d'une nacelle d'un ensemble selon l'invention,
Fig. 3 est une vue depuis l'intérieur d'un ensemble selon l'invention,
Fig. 4 est une vue de côté de l'ensemble de la Fig. 3,
Fig. 5 est une vue en coupe selon la ligne V d'une première variante d'un système de maintien pour un ensemble selon l'invention,
Fig. 6 est une vue similaire à la Fig. 5 pour une deuxième variante du système de maintien, et
Fig. 7 est une vue similaire à la Fig. 5 pour une troisième variante du système de maintien.

### EXPOSÉ DÉTAILLÉ DE MODES DE RÉALISATION

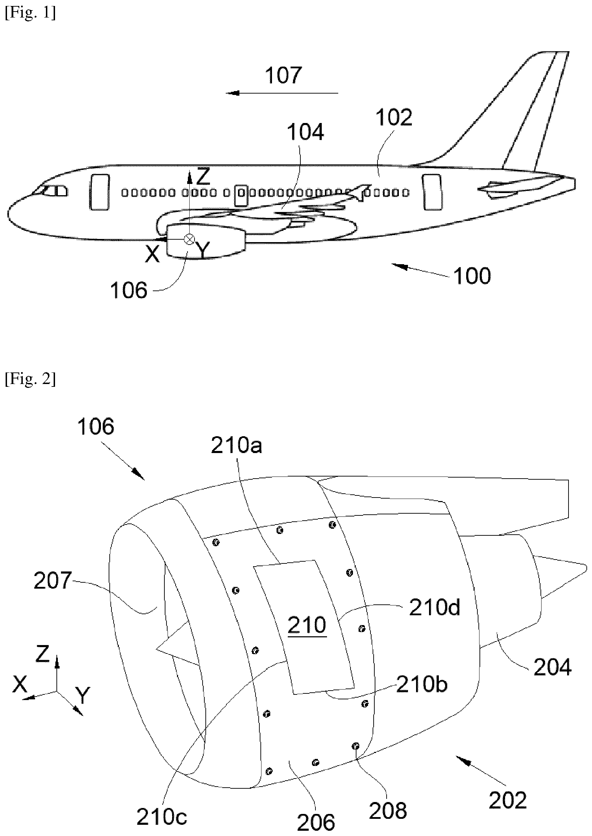

Dans la description qui suit, les termes relatifs à une position sont pris en référence à un aéronef en position normale de vol, c'est-à-dire comme il est représenté sur la Fig. 1.

Dans la description qui suit, et par convention, on appelle X la direction longitudinale du turboréacteur qui est parallèle à l'axe longitudinal de l'aéronef, on appelle Y la direction transversale qui est horizontale lorsque l'aéronef est au sol, et Z la direction verticale qui est verticale lorsque l'aéronef est au sol, ces trois directions X, Y et Z étant orthogonales entre elles.

La Fig. 1 montre un aéronef 100 qui comporte un fuselage 102 de chaque côté duquel est fixée une aile 104 qui porte un système de propulsion 106 comme par exemple un turboréacteur double flux. La flèche 107 indique la direction en marche avant de l'aéronef 100.

La Fig. 2 montre le système de propulsion 106 qui comporte une nacelle 202 entourant un moteur représenté ici par sa tuyère d'éjection 204.

La nacelle 202 comporte une structure rigide et un capot fixe 206 qui est fixé à la structure rigide et qui est ici un capot de soufflante. La fixation du capot fixe 206 est assurée par tous moyens de fixation 208 appropriés comme par exemple des vis, des rivets, etc. répartis en particulier sur le pourtour du capot fixe 206. Du fait de cette fixation, le capot fixe 206 est bien maintenu sur la structure rigide et il ne se déforme plus.

Bien que l'invention soit plus particulièrement décrite dans le cadre d'un capot de soufflante, l'invention peut s'appliquer à tous les capots de la nacelle 202, et en particulier au capot entourant l'entrée d'air 207 de la nacelle 202 (« Air Inlet Outer Surface » en langue anglo saxonne).

Pour permettre l'accès sous le capot fixe 206, le capot fixe 206 présente une ouverture en son âme, formant une fenêtre et la nacelle 202 comporte également un capot mobile 210 qui est monté mobile sur le capot fixe 206 entre une position fermée dans laquelle le capot mobile 210 obture la fenêtre et une position ouverte dans laquelle le capot mobile 210 n'obture pas la fenêtre.

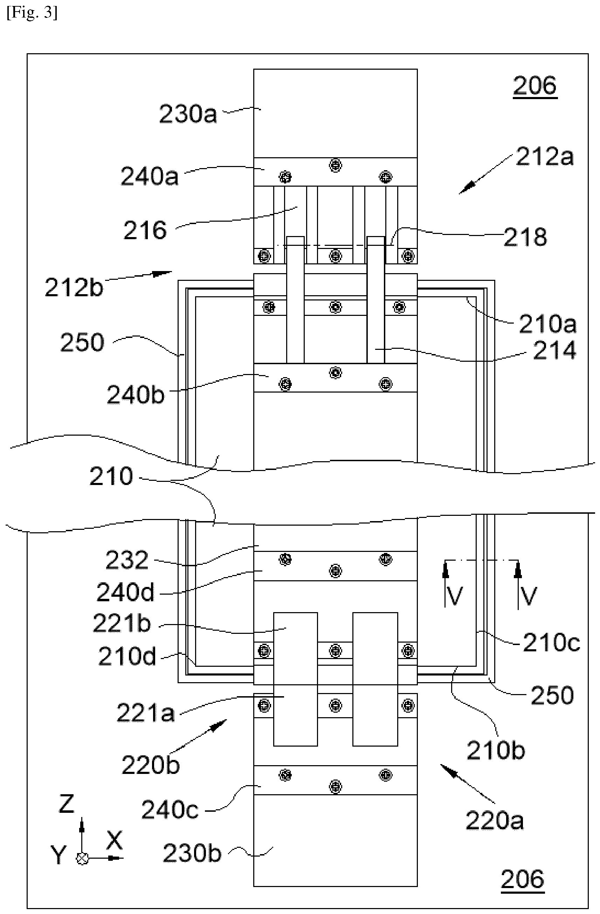

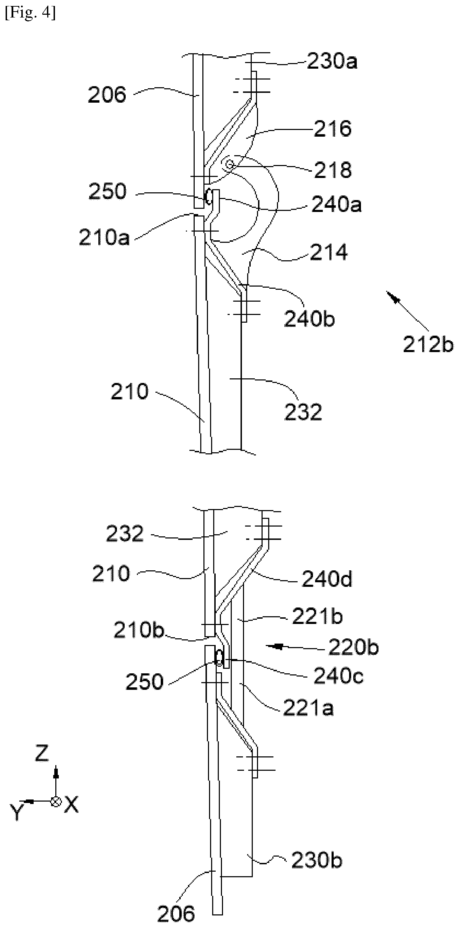

La Fig. 3 et la Fig. 4 montrent l'intérieur de la nacelle 202 et des capots fixe 206 et mobile 210.

Le capot mobile 210 est de forme globalement rectangulaire et il comporte un bord supérieur 210a orienté vers le haut de la nacelle 202, un bord inférieur 210b orienté vers le bas de la nacelle 202 à l'opposé du bord supérieur 210a, un bord avant 210c orienté vers l'avant de la nacelle 202 et un bord arrière 210d orienté vers l'arrière de la nacelle 202 à l'opposé du bord avant 210c. Les bords 210a-d du capot mobile 210 suivent les bords de la fenêtre du capot fixe 206.

Pour assurer le mouvement du capot mobile 210 par rapport au capot fixe 206, la nacelle 202 comporte au moins une charnière, de préférence deux charnières 212a-b comme illustré sur les figures. Pour chaque charnière 212a-b, la partie fixe 216 de la charnière 212a-b est fixée au capot fixe 206, la partie mobile 214 de la charnière 212a-b est fixée au capot mobile 210 et l'axe 218 est monté entre la partie fixe 216 et la partie mobile 214 de la charnière 212a-b pour réaliser l'articulation de la charnière 212a-b.

Les charnières 212a-b sont disposées le long du bord supérieur 210a du capot mobile 210 et chaque axe 218 est globalement parallèle au bord supérieur 210a.

Dans le mode de réalisation de l'invention présenté sur la Fig. 4, la charnière 212a est du type comportant une ferrure en col de cygne, mais elle pourrait être d'un type différent comme par exemple une charnière piano composée de secteur continu ou discontinu, ou d'un nombre supérieur ou inférieur aux deux charnières représentées, sans changement sur la portée de l'invention.

Pour assurer le verrouillage du capot mobile 210 en position fermée, la nacelle 202 comporte au moins deux verrous 220a-b disposés le long du bord inférieur 210b. Chaque verrou 220a-b comporte une première partie 221a solidaire du capot fixe 206, une deuxième partie 221b solidaire du capot mobile 210, des moyens de verrouillage, par exemple du type pêne, mobiles entre une position de verrouillage qui verrouille la première partie 221a et la deuxième partie 221b l'une avec l'autre et une position de déverrouillage qui laisse libre la première partie 221a et la deuxième partie 221b l'une par rapport à l'autre, et des moyens d'actionnement accessibles depuis l'extérieur de la nacelle 202, par exemple du type poignée, et prévus pour déplacer les moyens de verrouillage de la position de verrouillage à la position de déverrouillage et inversement.

Ainsi, après avoir positionné les moyens de verrouillage en position de déverrouillage, le capot mobile 210 peut être déplacé autour de l'axe 218 des charnières 212a-b de la position fermée à la position ouverte. À l'inverse, après déplacement du capot mobile 210 de la position ouverte à la position fermée, les moyens de verrouillage peuvent être à nouveau déplacés en leur position initiale de verrouillage.

Afin de renforcer le capot fixe 206 et le capot mobile 210 au niveau des charnières 212a-b et des verrous 220a-b, le capot fixe 206 et le capot mobile 210 comportent, respectivement, chacun une nervure de renfort 230a-b sur le capot fixe 206 et une autre nervure de renfort 232 sur le capot mobile 210.

Ainsi, le capot mobile 210 présente une nervure de renfort 232 qui s'étend sur sa hauteur entre son bord supérieur 210a et son bord inférieur 210b et sur laquelle est fixée, au voisinage d'une face supérieure située au niveau du bord supérieur 210a, la partie mobile 214 de chaque charnière 212a-b et, au voisinage d'une face inférieure située au niveau du bord inférieur 210b, la deuxième partie 221b de chaque verrou 220a-b. Préférentiellement, les nervures de renfort 232 s'étendent également sur la largeur du capot mobile 210 entre son bord avant 210c et son bord arrière 210d.

Le capot fixe 206 comporte dans le prolongement de la nervure de renfort 232 du capot mobile 210, une nervure de renfort 230a-b, c'est-à-dire une nervure supérieure de renfort 230a qui s'étend vers le haut à partir du bord de la fenêtre correspondant au bord supérieur 210a et une nervure inférieure de renfort 230b qui s'étend vers le bas à partir du bord de la fenêtre correspondant au bord inférieur 210b.

Au voisinage du bord supérieur 210a, la partie fixe 216 de chaque charnière 212a-b est fixée à la nervure supérieure de renfort 230a, et au voisinage du bord inférieur 210b, la première partie 221a de chaque verrou 220a-b est fixée à la nervure inférieure de renfort 230b.

Pour chaque charnière 212a-b, la partie fixe 216 prend la forme d'une chape femelle fixée à la nervure supérieure de renfort 230a le long du bord supérieur 210a du capot fixe 206 et la partie mobile 214 prend la forme d'une ferrure mâle fixée à la nervure de renfort 232 du capot mobile 210, où la partie mobile 214 est logée dans la partie fixe 216.

La mise en place des nervures de renfort 230a-b et 232 et la fixation des charnières 212a-b et des verrous 220a-b sur ces nervures de renfort 230a-b et 232 permettent un transfert des efforts subis par le capot mobile 210 au capot fixe 206 et à la structure de la nacelle 202 à travers les charnières 212a-b, les verrous 220a-b et les nervures de renfort 230a-b et 232. Dans le mode de réalisation de l'invention présenté ici, chaque nervure de renfort 230a-b, 232 est un seul composant portant respectivement la paire de parties fixes 216, la paire de parties mobiles 214, la paire de premières parties 221a et la paire de deuxièmes parties 221b, mais chaque nervure de renfort 230a-b, 232 peut être constituée de deux sous-nervures distantes l'une de l'autre, où chaque sous-nervure porte un élément de chaque paire.

Un ensemble selon l'invention comporte ainsi, le capot fixe 206, le capot mobile 210, les charnières 212a-b, les verrous 220a-b et les nervures de renfort 230a-b et 232. Selon un mode d'invention alternatif, les nervures de renforts 230 a-b et 232 pourraient être remplacées par une prise d'épaisseur locale des panneaux, par l'ajout d'une âme alvéolaire interne prise entre deux peaux externes pour constituer un panneau dit 'sandwich'.

Pour éviter l'apparition de traînées, les charnières 212a-b, les verrous 220a-b et les nervures de renfort 230a-b et 232 sont disposés à l'intérieur de la nacelle 202, c'est-à-dire sur les faces des capots mobile 210 et fixe 206 qui sont orientées vers l'intérieur de la nacelle 202.

Pour améliorer le transfert des efforts, pour les parties fixes 216, pour les parties mobiles 214, pour les premières parties 221a et pour les deuxièmes parties 221b, l'ensemble comporte une ferrure 240a-d intermédiaire qui assure la fixation des parties fixes 216, des parties mobiles 214, des premières parties 221a ou des deuxièmes parties 221b aux extrémités des nervures de renfort 230a-b, 232 leur correspondant respectivement. Ainsi, chaque ferrure 240a-d porte les parties fixes 216, les parties mobiles 214, les premières parties 221a ou les deuxièmes parties 221b et est fixée, d'une part, à la nervure de renfort 230a-b, 232 correspondante et, d'autre part, au capot 206, 210 portant la nervure de renfort 230a-b, 232 correspondante.

Ainsi, il est prévu une ferrure 240a sur laquelle sont fixées les parties fixes 216, une ferrure 240b sur laquelle sont fixées les parties mobiles 214, une ferrure 240c sur laquelle sont fixées les premières parties 221a et une ferrure 240d sur laquelle sont fixées les deuxièmes parties 221b.

Chaque ferrure 240a-d est fixée ici par des vis qui se vissent dans la nervure de renfort 230a-b, 232 correspondante et des vis qui se vissent dans le capot 206, 210 correspondant.

Dans le mode de réalisation de l'invention présenté ici, chaque nervure de renfort 230a-b, 232 est un seul composant portant respectivement la paire de parties fixes 216, la paire de parties mobiles 214, la paire de premières parties 221a et la paire de deuxièmes parties 221b, mais chaque nervure de renfort 230a-b, 232 peut être constituée de deux sous-nervures distantes l'une de l'autre, où chaque sous-nervure porte un élément de chaque paire.

Pour assurer l'étanchéité au niveau du bord supérieur 210a, l'ensemble comporte un joint 250 qui est fixé au capot fixe 206 le long des bords de la fenêtre correspondante.

La ferrure 240b sur laquelle sont fixées les parties mobiles 216 comporte, le long du bord supérieur 210a, un prolongement qui, en position fermée, est contre le joint 250 du côté opposé au capot fixe 206 pour comprimer le joint 250.

De la même manière, pour assurer l'étanchéité au niveau du bord inférieur 210b, la ferrure 240d sur laquelle sont fixées les deuxièmes parties 221b comporte, le long du bord inférieur 210b, un prolongement qui, en position fermée, est contre le joint 250 du côté opposé au capot fixe 206 pour comprimer le joint 250.

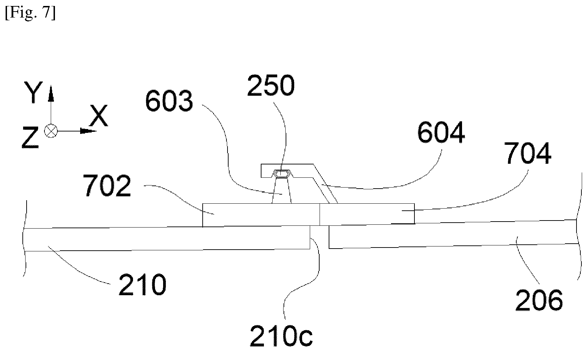

La Fig. 7 montre un mode de réalisation particulier de l'invention. De préférence, pour limiter les phénomènes d'écopage dus à l'écartement du bord avant 210c, l'ensemble comporte au moins un verrou complémentaire 702, 704 au niveau dudit bord avant 210c pour verrouiller et aligner ledit bord avant 210c et le bord correspondant de la fenêtre. Ce ou ces verrous complémentaires 702, 704 ne pourront être fermés que si les verrous du bord inférieur 210b le sont. Cela permettra de contrôler si le capot mobile 210 est bien fermé avant le décollage. Comme pour les verrous précédents, chaque verrou complémentaire comporte, le long du bord avant 210c, une première partie 704 solidaire du capot fixe 206, une deuxième partie 702 solidaire du capot mobile 210, des moyens de verrouillage, par exemple un pêne, mobiles entre une position de verrouillage qui verrouille la première partie 704 et la deuxième partie 702 l'une avec l'autre et une position de déverrouillage qui laisse libre la première partie 704 et la deuxième partie 702 l'une par rapport à l'autre, et des moyens d'actionnement prévus pour déplacer les moyens de verrouillage de la position de verrouillage à la position de déverrouillage et inversement.

Les moyens d'actionnement sont par exemple une poignée accessible depuis l'extérieur de la nacelle 202. La poignée est mobile entre une position rétractée dans laquelle elle est dans un logement prévu à cet effet dans le capot mobile 210 ou le capot fixe 206, et une position déployée dans laquelle elle est en dehors dudit logement et dépasse donc du capot considéré. La position rétractée correspond à la position de verrouillage et la position déployée correspond à la position de déverrouillage. Avec un tel arrangement, il est possible de vérifier visuellement que chaque verrou complémentaire est bien en position de verrouillage, c'est-à-dire poignée en position rétractée, avant le décollage.

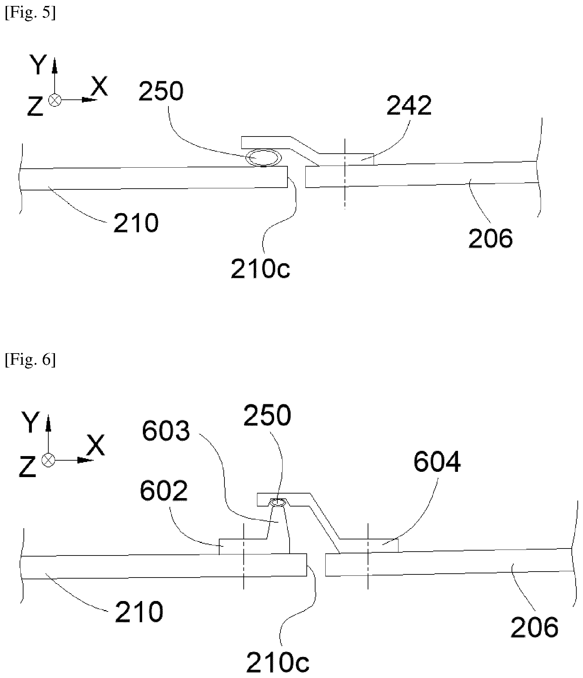

Les Figs. 5 et 6 montrent deux modes de réalisation particuliers permettant de réaliser l'étanchéité le long du bord avant 210c, les mêmes modes s'appliquent également au bord arrière 210d.

Dans le mode de réalisation de la Fig. 5, l'ensemble comporte un joint 250 qui est fixé au capot fixe 210 le long du bord avant 210c et une ferrure avant 242 fixée au capot mobile 206 et qui comporte un prolongement qui, en position fermée, est contre le joint 250 du côté opposé au capot fixe 206 pour comprimer le joint 250.

Dans le mode de réalisation de la Fig. 6, l'ensemble comporte une première ferrure 602 fixée au capot mobile 210, une deuxième ferrure 604 fixée au capot fixe 206 et un joint 250.

La première ferrure 602 comporte une nervure 603 qui s'étend parallèlement au bord avant 210c et dont le sommet pointe vers l'intérieur de la nacelle 202.

Le joint 250 est fixé le long d'une gorge que la deuxième ferrure 604 comporte à cet effet du côté du capot mobile 210.

En position fermée, le sommet de la nervure 603 est contre le joint 250 du côté opposé à la gorge pour comprimer le joint 250.

Selon un mode de réalisation alternatif, déjà évoqué précédemment, il est également possible de mettre en place des capots 206 et 210 présentant une structure multicouche dite 'structure panneau composite sandwich' permettant la fixation des charnières et des verrous à une surépaisseur locale de la structure multicouche.

## Revendications

1. Ensemble pour une nacelle (202) d'un aéronef (100), ledit ensemble comportant :
- un capot fixe (206) destiné à être fixé à une structure rigide de la nacelle (202) et présentant une ouverture en son âme, formant une fenêtre,
- un capot mobile (210) monté mobile sur le capot fixe (206) entre une position fermée dans laquelle le capot mobile (210) obture la fenêtre et une position ouverte dans laquelle le capot mobile (210) n'obture pas la fenêtre, et comportant un bord supérieur (210a) destiné à être orienté vers le haut de la nacelle (202) et un bord inférieur (210b) à l'opposé du bord supérieur (210a), où le capot mobile (210) présente entre son bord supérieur (210a) et son bord inférieur (210b), une nervure de renfort (232), où le capot fixe (206) comporte dans le prolongement de la nervure de renfort (232) du capot mobile (210), une nervure supérieure de renfort (230a) qui s'étend à partir du bord de la fenêtre correspondant au bord supérieur (210a) et une nervure inférieure de renfort (230b) qui s'étend à partir du bord de la fenêtre correspondant au bord inférieur (210b),
- au moins une charnière (212a-b), où chaque charnière (212a-b) comporte une partie fixe (216) sous forme d'une chape femelle fixée à la nervure supérieure de renfort (230a) le long du bord supérieur (210a) du capot fixe (206), une partie mobile (214) sous forme d'une ferrure mâle fixée à la nervure de renfort (232) du capot mobile (210), où la partie mobile (214) est logée dans la partie fixe (216), et un axe (218) monté entre la partie fixe (216) et la partie mobile (214) et où chaque axe (218) est parallèle au bord supérieur (210a),
- au moins deux verrous (220a-b) disposés le long du bord inférieur (210b) du capot mobile (210), où chaque verrou (220a-b) comporte une première partie (221a) solidaire de la nervure inférieure de renfort (230b), une deuxième partie (221b) solidaire de la nervure de renfort (232) du capot mobile (210), des moyens de verrouillage mobiles entre une position de verrouillage qui verrouille la première partie (221a) et la deuxième partie (221b) l'une avec l'autre et une position de déverrouillage qui laisse libre la première partie (221a) et la deuxième partie (221b) l'une par rapport à l'autre, et des moyens d'actionnement prévus pour déplacer les moyens de verrouillage de la position de verrouillage à la position de déverrouillage et inversement,
- une ferrure (240a) sur laquelle sont fixées les parties fixes (216),
- une ferrure (240b) sur laquelle sont fixées les parties mobiles (214),
- une ferrure (240c) sur laquelle sont fixées les premières parties (221a) et
- une ferrure (240d) sur laquelle sont fixées les deuxièmes parties (221b), et
où chaque ferrure (240a-d) est fixée, d'une part, à la nervure de renfort (230a-b, 232) correspondante et, d'autre part, au capot (206, 210) portant la nervure de renfort (230a-b, 232) correspondante.

2. Ensemble selon la revendication 1, **caractérisé en ce que** chaque nervure de renfort (230a-b, 232) est constituée de deux sous-nervures distantes l'une de l'autre, où chaque sous-nervure porte un élément de chaque paire, à savoir de la paire de parties fixes (216), de la paire de parties mobiles (214), de la paire de premières parties (221a) et de la paire de deuxièmes parties (221b).

3. Ensemble selon l'une des revendications 1 ou 2, **caractérisé en ce qu'**il comporte un joint (250) fixé au capot fixe (206) le long des bords de la fenêtre et **en ce que** la ferrure (240b) sur laquelle sont fixées les parties mobiles (216) comporte, le long du bord supérieur (210a), un prolongement qui, en position fermée, est contre le joint (250) du côté opposé au capot fixe (206).

4. Ensemble selon l'une des revendications 1 à 3, **caractérisé en ce qu'**il comporte un joint (250) fixé au capot fixe (206) le long des bords de la fenêtre et **en ce que** la ferrure (240d) sur laquelle sont fixées les deuxièmes parties (221b) comporte, le long du bord inférieur (210b), un prolongement qui, en position fermée, est contre le joint (250) du côté opposé au capot fixe (206).

5. Ensemble selon l'une des revendications 1 à 4, **caractérisé en ce qu'**il comporte le long d'un bord avant (210c) du capot mobile (210), au moins un verrou complémentaire (702,704), où chaque verrou complémentaire (702,704) comporte une première partie (704) solidaire du capot fixe (206), une deuxième partie (702) solidaire du capot mobile (210), des moyens de verrouillage mobiles entre une position de verrouillage qui verrouille la première partie (704) et la deuxième partie (702) l'une avec l'autre et une position de déverrouillage qui laisse libre la première partie (704) et la deuxième partie (702) l'une par rapport à l'autre, et des moyens d'actionnement prévus pour déplacer les moyens de verrouillage de la position de verrouillage à la position de déverrouillage et inversement.

6. Ensemble selon la revendication 5, **caractérisé en ce que** les moyens d'actionnement sont une poignée accessible depuis l'extérieur de la nacelle (202), **en ce que** la poignée est mobile entre une position rétractée dans laquelle elle est dans un logement prévu à cet effet dans le capot mobile (210) ou le capot fixe (206) et une position déployée dans laquelle elle est en dehors dudit logement et dépasse du capot considéré, et **en ce que** la position rétractée correspond à la position de verrouillage et la position déployée correspond à la position de déverrouillage.

7. Nacelle (202) d'un aéronef (100) comportant une structure rigide et un ensemble selon l'une des revendications précédentes où le capot fixe (206) est fixé à la structure rigide.

8. Aéronef (100) comportant au moins une nacelle (202) selon la revendication précédente.

## Patentansprüche

1. Anordnung für eine Gondel (202) eines Luftfahrzeugs (100), wobei die Anordnung umfasst:
- eine feste Haube (206), die dazu bestimmt ist, an einer starren Struktur der Gondel (202) befestigt zu werden, und eine Öffnung in ihrem Mittelteil aufweist, die ein Fenster bildet,
- eine bewegliche Haube (210), die an der festen Haube (206) beweglich zwischen einer geschlossenen Position, in der die bewegliche Haube (210) das Fenster verschließt, und einer geöffneten Position, in der die bewegliche Haube (210) das Fenster nicht verschließt, angebracht ist und einen oberen Rand (210a), der dazu bestimmt ist, zur Oberseite der Gondel (202) ausgerichtet zu werden, und einen unteren Rand (210b) gegenüber dem oberen Rand (210a) umfasst, wobei die bewegliche Haube (210) zwischen ihrem oberen Rand (210a) und ihrem unteren Rand (210b) eine Verstärkungsrippe (232) aufweist, wobei die feste Haube (206) in der Verlängerung der Verstärkungsrippe (232) der beweglichen Haube (210) eine obere Verstärkungsrippe (230a), die sich vom dem oberen Rand (210a) entsprechenden Rand des Fensters aus erstreckt, und eine untere Verstärkungsrippe (230b), die sich vom dem unteren Rand (210b) entsprechenden Rand des Fensters aus erstreckt, umfasst,
- mindestens ein Scharnier (212a-b), wobei jedes Scharnier (212a-b) einen festen Teil (216) in Form eines Gabelkopfes, der an der oberen Verstärkungsrippe (230a) entlang des oberen Randes (210a) der festen Haube (206) befestigt ist, einen beweglichen Teil (214) in Form eines Steckbeschlags, der an der Verstärkungsrippe (232) der beweglichen Haube (210) befestigt ist, wobei der bewegliche Teil (214) in dem festen Teil (216) aufgenommen ist, und eine Achse (218), die zwischen dem festen Teil (216) und dem beweglichen Teil (214) angebracht ist, umfasst, und wobei jede Achse (218) parallel zum oberen Rand (210a) ist,
- mindestens zwei Riegel (220a-b), die entlang des unteren Randes (210b) der beweglichen Haube (210) angeordnet sind, wobei jeder Riegel (220a-b) einen ersten Teil (221a) umfasst, der mit der unteren Verstärkungsrippe (230b) fest verbunden ist, einen zweiten Teil (221b), der mit der Verstärkungsrippe (232) der beweglichen Haube (210) fest verbunden ist, Verriegelungsmittel, die zwischen einer Verriegelungsposition, die den ersten Teil (221a) und den zweiten Teil (221b) miteinander verriegelt, und einer Entriegelungsposition, in welcher der erste Teil (221a) und der zweite Teil (221b) voneinander gelöst sind, beweglich sind, und Betätigungsmittel, die dafür vorgesehen sind, die Verriegelungsmittel aus der Verriegelungsposition in die Entriegelungsposition und umgekehrt zu bewegen,
- einen Beschlag (240a), an dem die festen Teile (216) befestigt sind,
- einen Beschlag (240b), an dem die beweglichen Teile (214) befestigt sind,
- einen Beschlag (240c), an dem die ersten Teile (221a) befestigt sind, und
- einen Beschlag (240d), an dem die zweiten Teile (221b) befestigt sind, und
wobei jeder Beschlag (240a-d) einerseits an der entsprechenden Verstärkungsrippe (230a-b, 232) und andererseits an der Haube (206, 210), welche die entsprechende Verstärkungsrippe (230a-b, 232) trägt, befestigt ist.

2. Anordnung nach Anspruch 1, **dadurch gekennzeichnet, dass** jede Verstärkungsrippe (230a-b, 232) aus zwei voneinander entfernten Teilrippen besteht, wobei jede Teilrippe ein Element jedes Paares trägt, nämlich des Paares fester Teile (216), des Paares beweglicher Teile (214), des Paares erster Teile (221a) und des Paares zweiter Teile (221b).

3. Anordnung nach einem der Ansprüche 1 oder 2, **dadurch gekennzeichnet, dass** sie eine Dichtung (250) umfasst, die an der festen Haube (206) entlang der Ränder des Fensters befestigt ist, und dadurch, dass der Beschlag (240b), an dem die beweglichen Teile (216) befestigt sind, entlang des oberen Randes (210a) eine Verlängerung umfasst, die in der geschlossenen Position auf der der festen Haube (206) gegenüberliegenden Seite an der Dichtung (250) anliegt.

4. Anordnung nach einem der Ansprüche 1 bis 3, **dadurch gekennzeichnet, dass** sie eine Dichtung (250) umfasst, die an der festen Haube (206) entlang der Ränder des Fensters befestigt ist, und dadurch, dass der Beschlag (240d), an dem die zweiten Teile (221b) befestigt sind, entlang des unteren Randes (210b) eine Verlängerung umfasst, die in der geschlossenen Position auf der der festen Haube (206) gegenüberliegenden Seite an der Dichtung (250) anliegt.

5. Anordnung nach einem der Ansprüche 1 bis 4, **dadurch gekennzeichnet, dass** sie entlang eines vorderen Randes (210c) der beweglichen Haube (210) mindestens einen komplementären Riegel (702,704) umfasst, wobei jeder komplementäre Riegel (702,704) einen ersten Teil (704) umfasst, der mit der festen Haube (206) fest verbunden ist, einen zweiten Teil (702), der mit der beweglichen Haube (210) fest verbunden ist, Verriegelungsmittel, die zwischen einer Verriegelungsposition, die den ersten Teil (704) und den zweiten Teil (702) miteinander verriegelt, und einer Entriegelungsposition, in welcher der erste Teil (704) und der zweite Teil (702) voneinander gelöst sind, beweglich sind, und Betätigungsmittel, die dafür vorgesehen sind, die Verriegelungsmittel aus der Verriegelungsposition in die Entriegelungsposition und umgekehrt zu bewegen.

6. Anordnung nach Anspruch 5, **dadurch gekennzeichnet, dass** die Betätigungsmittel ein Griff sind, der von der Außenseite der Gondel (202) zugänglich ist, dadurch, dass der Griff zwischen einer zwischen einer eingezogenen Position, in welcher er sich in einer zu diesem Zweck in der beweglichen Haube (210) oder der festen Haube (206) vorgesehenen Aufnahme befindet, und einer ausgezogenen Position, in welcher er sich außerhalb der Aufnahme befindet und über die betreffende Haube hinausragt, beweglich ist, und dadurch, dass die eingezogene Position der Verriegelungsposition entspricht und die ausgezogene Position der Entriegelungsposition entspricht.

7. Gondel (202) eines Luftfahrzeugs (100), welche eine starre Struktur und eine Anordnung nach einem der vorhergehenden Ansprüche umfasst, wobei die feste Haube (206) an der starren Struktur befestigt ist.

8. Luftfahrzeug (100), welches mindestens eine Gondel (202) nach dem vorhergehenden Anspruch umfasst.

## Claims

1. Assembly for a nacelle (202) of an aircraft (100), said assembly comprising:
- a fixed cowl (206) that is intended to be attached to a rigid structure of the nacelle (202) and has an opening in its web, forming a window,
- a movable cowl (210) that is mounted so as to be able to move on the fixed cowl (206) between a closed position in which the movable cowl (210) blocks the window and an open position in which the movable cowl (210) does not block the window, and comprising an upper edge (210a) that is intended to be oriented towards the top of the nacelle (202) and a lower edge (210b) on the opposite side from the upper edge (210a), the movable cowl (210) having a reinforcing rib (232) between its upper edge (210a) and its lower edge (210b), the fixed cowl (206) comprising, in continuation of the reinforcing rib (232) of the movable cowl (210), an upper reinforcing rib (230a) which extends from that edge of the window corresponding to the upper edge (210a) and a lower reinforcing rib (230b) which extends from that edge of the window corresponding to the lower edge (210b),
- at least one hinge (212a-b), where each hinge (212a-b) comprises a fixed part (216) in the form of a female clevis attached to the upper reinforcing rib (230a) along the upper edge (210a) of the fixed cowl (206), a movable part (214) in the form of a male fitting attached to the reinforcing rib (232) of the movable cowl (210), where the movable part (214) is accommodated in the fixed part (216), and a pin (218) mounted between the fixed part (216) and the movable part (214) and in which each pin (218) is parallel to the upper edge (210a),
- at least two locks (220a-b) arranged along the lower edge (210b) of the movable cowl (210), where each lock (220a-b) comprises a first part (221a) secured to the lower reinforcing rib (230b), a second part (221b) secured to the reinforcing rib (232) of the movable cowl (210), locking means that are able to move between a locking position which locks the first part (221a) and the second part (221b) to one another and an unlocking position in which the first part (221a) and the second part (221b) are free with respect to one another, and actuation means that are provided in order to move the locking means from the locking position to the unlocking position and vice versa,
- a fitting (240a) to which are attached the fixed parts (216),
- a fitting (240b) to which are attached the movable parts (214),
- a fitting (240c) to which are attached the first parts (221a) and
- a fitting (240d) to which are attached the second parts (221b), and
wherein each fitting (240a-d) is attached on one hand to the corresponding reinforcing rib (230a-b, 232), and on the other hand to the cowl (206, 210) bearing the corresponding reinforcing rib (230a-b, 232).

2. Assembly according to Claim 1, **characterized in that** each reinforcing rib (230a-b, 232) consists of two sub-ribs that are remote from one another, where each sub-rib bears an element of each pair, specifically of the pair of fixed parts (216), of the pair of movable parts (214), of the pair of first parts (221a) and of the pair of second parts (221b).

3. Assembly according to one of Claims 1 to 2, **characterized in that** it comprises a seal (250) attached to the fixed cowl (206) along the edges of the window, and **in that** the fitting (240b) to which the movable parts (216) are attached comprises, along the upper edge (210a), an extension which, in the closed position, is against the seal (250) on the opposite side from the fixed cowl (206).

4. Assembly according to one of Claims 1 to 3, **characterized in that** it comprises a seal (250) attached to the fixed cowl (206) along the edges of the window, and **in that** the fitting (240d) to which the second parts (221b) are attached comprises, along the upper edge (210b), an extension which, in the closed position, is against the seal (250) on the opposite side from the fixed cowl (206).

5. Assembly according to one of Claims 1 to 4, **characterized in that** it comprises, along a front edge (210c) of the movable cowl (210), at least one complementary lock (702, 704), where each complementary lock (702, 704) comprises a first part (704) secured to the fixed cowl (206), a second part (702) secured to the movable cowl (210), locking means that are able to move between a locking position which locks the first part (704) and the second part (702) to one another and an unlocking position in which the first part (704) and the second part (702) are free with respect to one another, and actuation means that are provided in order to move the locking means from the locking position to the unlocking position and vice versa.

6. Assembly according to Claim 5, **characterized in that** the actuation means are a handle that is accessible from outside the nacelle (202), **in that** the handle is able to move between a retracted position, in which it is inside a recess provided to that end in the movable cowl (210) or the fixed cowl (206), and a deployed position, in which it is outside said recess and stands proud of the cowl in question, and **in that** the retracted position corresponds to the locking position and the deployed position corresponds to the unlocking position.

7. Nacelle (202) for an aircraft (100) comprising a rigid structure and an assembly according to one of the preceding claims, the fixed cowl (206) being attached to the rigid structure.

8. Aircraft (100) comprising at least one nacelle (202) according to the preceding claim.
